# EUROPÄISCHE PATENTSCHRIFT

(11) **EP 1 222 043 B1**
(45) Veröffentlichungstag und Bekanntmachung des Hinweises auf die Patenterteilung: **16.06.2004**
(21) Anmeldenummer: 00954252.3
(22) Anmeldetag: 06.09.2000
(51) Int. Cl.: B21J 15/02, B62D 1/18, F16B 5/04

(54) **VERFAHREN ZUR HERSTELLUNG VON LAMELLENPAKETEN FÜR VERSTELLBARE LENKSÄULEN**
METHOD FOR THE PRODUCTION OF LAMELLA PACKETS FOR ADJUSTABLE STEERING COLUMNS
PROCEDE DE FABRICATION D'ENSEMBLES LAMELLAIRES POUR COLONNES DE DIRECTION REGLABLES

(30) Priorität: 20.10.1999 CH 191999
(43) Veröffentlichungstag der Anmeldung: 17.07.2002
(73) Patentinhaber: Adval Tech Holding AG, 3172 Niederwangen (CH)
(72) Erfinder: LÜTHI, Rudolf, CH-3172 Niederwangen (CH); JÖHR, Hans, CH-3122 Kehrsatz (CH); GRAF, Urs, CH-3178 Bösingen (CH)
(74) Vertreter: Isler & Pedrazzini AG
(86) Internationale Anmeldenummer: PCT/CH2000/000473
(87) Internationale Veröffentlichungsnummer: WO 2001/028710

(56) Entgegenhaltungen:
- EP-A- 0 802 104
- DE-A- 4 409 556
- DE-A- 19 609 263
- DE-C- 902 586
- DE-U- 8 632 788
- GB-A- 401 718

## Beschreibung

### TECHNISCHES GEBIET

Die vorliegende Erfindung betrifft ein Verfahren zur Herstellung von Lamellenpaketen, wie sie für verstellbare Lenksäulen in Automobilen eingesetzt werden und welche über mehrere Reibflächen ein Durchrutschen und ungewolltes Verstellen der Lenksäule verhindern. Die Lamellenpakete umfassen eine weiche Lamelle aus einem weicheren Blechmaterial und mindestens eine darübergeschichtete harte Lamelle aus einem härteren Blechmaterial. Verbunden sind die Lamellen in den Paketen durch mindestens einen, aus der weichen Lamelle jeweils herausgeformten Niet.

### STAND DER TECHNIK

Derartige Lamellenpakte sind bekannt und umfassen einerseits Pakete mit sogenannten Längslamellen und andererseits Pakete mit sogenannten Höhenlamellen. Die einzelnen Lamellen weisen in den Paketen einen ihrer Dicke etwa entsprechenden gegenseitigen Abstand auf. Jeweils ein Paket Längslamellen und ein Paket Höhenlamellen bilden ein zusammengehöriges Paar, wobei die beiden Pakete jedes Paares so ineinandergeschoben sind, dass sich in der Schichtung Längs- und Höhenlamellen abwechseln. Auf gegenseitigen Berührungsflächen sind die Lamellen mit z.T. speziell strukturierten Reibflächen versehen.

Zu beiden Seiten eines sogenannten Führungskastens, der die Lager für die Lenksäule aufnimmt, ist jeweils ein Paar von Lamellenpakten der genannten Art angeordnet. Das Längslamellenpaket ist hierbei über Befestigungsösen jeweils am Führungskasten befestigt, während das Höhenlamellenpaar, ebenfalls über Befestigungsösen, jeweils an einer Haltebride angebracht ist, die wiederum chassis-fest montiert ist. Ein Spannbolzen durchsetzt den Führungskasten sowie auch alle Lamellen, wobei an den Lamellen hierzu jeweils Führungsschlitze vorgesehen sind.

Die Verstellbarkeit der Lenksäule beruht nun darauf, dass sich die in gegenseitigem Eingriff befindlichen Lamellenpakete bei gelöstem Spannbolzen gegeneinander verschieben und dabei auch verschwenken lassen, wobei der Verschiebe- bzw. Verschwenkbereich durch die Länge der erwähnten Führungsschlitze in den Lamellen begrenzt ist. Zur Arretierung in einer gewünschten Position wird der Spannbolzen angezogen, wobei die erwähnten Reibflächen an den Lamellen aufeinandergepresst werden.

Es versteht sich, dass - bei gegebener Spannkraft des Spannbolzens - die gesamte, sich ergebende Reib- bzw. Haltekraft mit der Anzahl der Lamellen in den Lamellenpaketen korreliert und durch Wahl dieser Anzahl einfach eingestellt werden kann.

Um die Lamellen in den bekannten Lamellenpaketen in ihrem gewünschten gegenseitigen Abstand zu halten, sind einige von ihnen im Bereich der erwähnten Befestigungsösen mit einem aus der Lamellenebene herausgeformten Kragen versehen. Auch der eingangs erwähnte Niet, durch welchen die einzelnen Lamellen jedes Pakets zusammengehalten werden, wird durch einen solchen Kragen gebildet, der an einer der beiden äussesten Lamellen jedes Pakets - und zwar bei der sogenannt weichen Lamelle - an einer der Befestigungsösen soweit herausgearbeitet ist, dass er die entsprechenden Befestigungsösen der übrigen Lamellen durchsetzen kann. Jenseits der gegenüberliegenden äussersten Lamelle ist dieser Kragen dann um den Rand der Befestigungsöse dieser Lamelle nach aussen umgeformt.

### DARSTELLUNG DER ERFINDUNG

Durch die Erfindung, wie sie in den Patentansprüchen umschrieben ist, wird ein Fertigungskonzept (Verfahren) angegeben, welches eine rationelle, automatische Fertigung und Montage von Lamellenpaketen der beschrieben Art ermöglicht

Gemäss Patentanspruch 1 ist das Verfahren insbesondere dadurch gekennzeichnet, dass zwei nacheinander geschaltete Pressen verwendet werden, wobei im Takt der ersten Presse
- in der ersten Presse aus einem Band des weicheren Blechmaterials jeweils eine weiche Lamelle vollständig ausgeformt und ausgestanzt wird,
- jeweils eine so hergestellte weiche Lamelle in die zweite Presse transportiert wird,
- in der zweiten Presse aus einem Band des härteren Blechmaterials mindestens eine harte Lamelle vollständig ausgeformt und ausgestanzt, über einer weichen Lamelle abgelegt und auch noch die Nietverbindung hergestellt wird.

### KURZE ERLÄUTERUNG DER FIGUREN

Die Erfindung soll nachfolgend anhand eines Ausführungsbeispiels im Zusammenhang mit der Zeichnung näher erläutert werden. Es zeigen:
- Fig. 1: das Kemstück einer verstellbaren Lenksäule eines Automobils mit einem Paket Längslamellen und einem Paket Höhenlamellen;
- Fig. 2: die beiden Lamellenpakete im Schnitt (I-I in Fig. 5b)
- Fig. 3: eine Ausschnittsvergrösserung (Schnitt II-II in Fig. 2) eines Lamellenpakets mit einer Nietverbindung;
- Fig. 4: ein Schema einer Anlage zur Ausführung des erfindungsgemässen Verfahrens; und
- Fig. 5: unter a) und b) jeweils eine Aufsicht auf einen in der Anordnung gemäss Fig. 4 verwendeten Werkstückträger mit einem Paket Höhen- und einem Paket Längslamellen.

### WEGE ZUR AUSFÜHRUNG DER ERFINDUNG

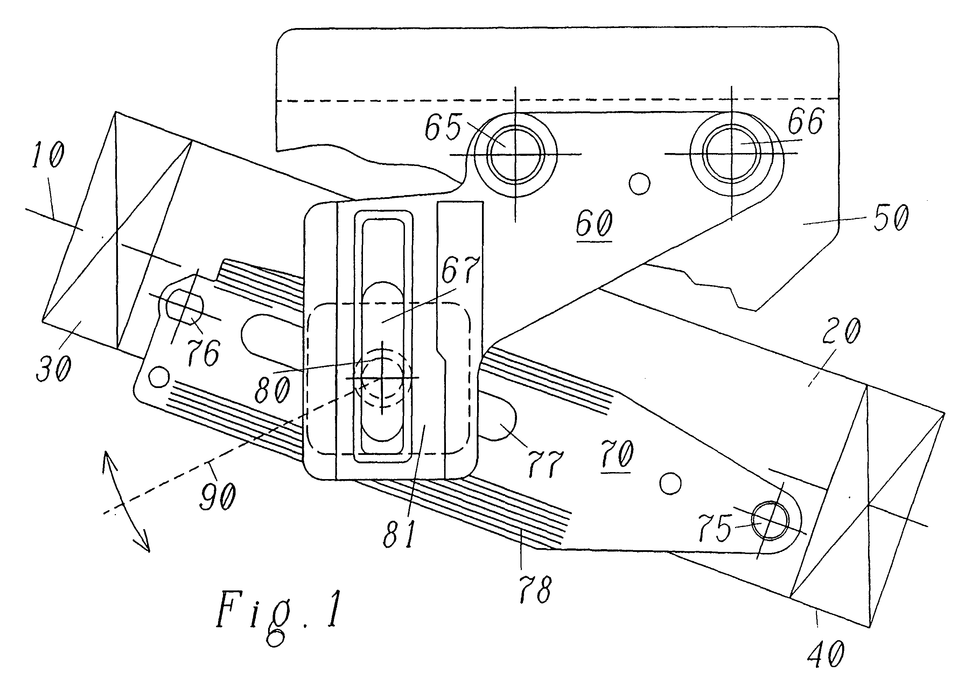

Fig. 1 zeigt eine Anordnung der vorstehend bereits beschriebenen Art, wobei mit 10 die Achse einer Lenksäule, mit 20 ein Führungskasten, mit 30 und 40 zwei Lager für die Lenksäule im Führungskasten, mit 50 eine lediglich teilweise dargestellte, brückartig über dem Führungskasten 20 angeordnete, chassisfeste Haltebride und mit 60 und 70 zwei Lamellenpakete bezeichnet sind. Das Lamellenpaket 60 ist mittels zweier Ösen 65 und 66 an der Haltebride 50 befestigt und das Lamellenpaket 70 mittles ebenfalls zweier Ösen 75 und 76 an dem Führungskasten 20. Ein entsprechendes, in Fig. 1 nicht sichtbares Paar von Lamellenpakten ist hinter dem Führungskasten 20 in gleicher Weise wie dass Paar 60 und 70 angeordnet und befestigt. Die Lamellen des Pakets 60 weisen einen vertikal ausgerichteten Führungsschlitz 67 für die Höhenverstellund der Lenksäule auf und werden deshalb als Höhenlamellen bezeichnet. Ein entsprechender Führungsschlitz 77 ist auch in den Lamellen des Pakets 70 vorgesehen, der aber im wesentlichen horizontal ausgerichtet ist und zur Längsverstellung der Lenksäule dient. Die Lamellen des Pakets 70 werden entsprechend als Längslamellen bezeichnet. Ein im Führungskasten gehaltener Spannbolzen 80 durchsetzt die Führungsschlitze 67, 77 der Lamellenpakete 60 und 70 und zwar beider Paare vor und hinter dem Führungskasten 20. Bei gelöstem Spannbolzen 80 können die Längslamellen und mit ihnen via den Führungskasten 20 die Lenksäule gegenüber den Höhenlamellen und damit via der Haltebride 50 gegenüber dem Chassis längs- und in der Höhe verschoben und verschwenkt werden. Der Verstellbereich wird hierbei durch die Führungsschlitze 67 und 77 vorgegeben und begrenzt. In jeder gewünschten Position und Schwenklage des Verstellbereichs kann die Lenksäule durch Spannen des Spannbolzens 80 arretiert werden, was z.B. mittels eines lediglich schematisch angedeuteten Arretierhebels 90 erfolgen kann. Beim Verspannen werden Reibflächen an den Lamellen aufeinandergepresst.

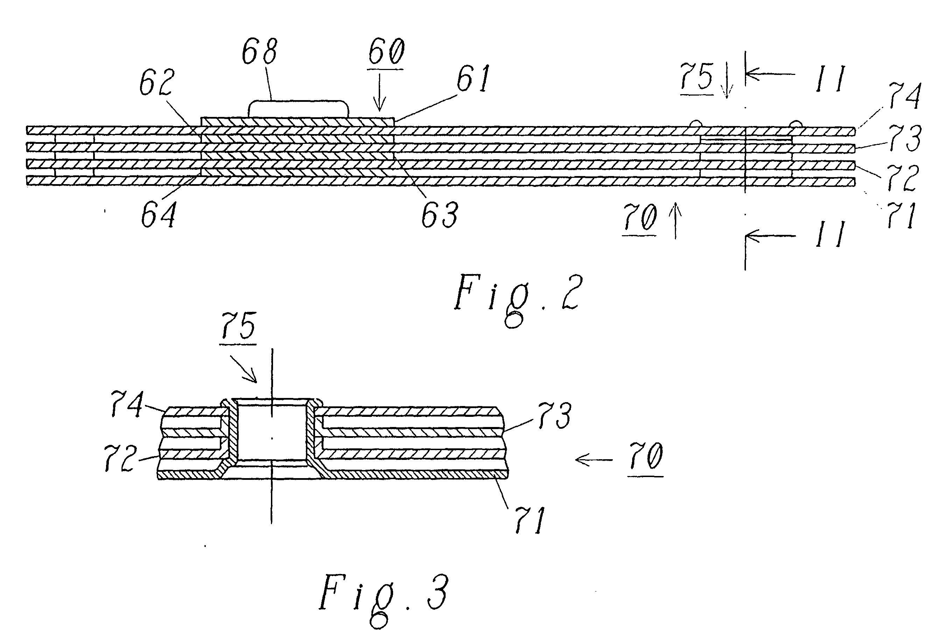

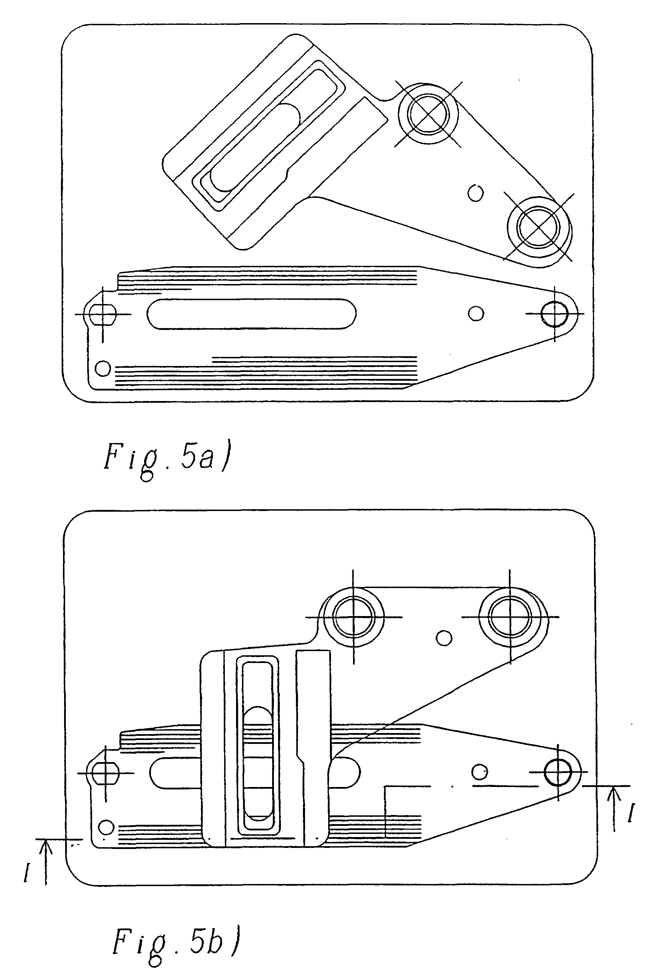

Fig. 2 zeigt einen Schnitt entlang der Schnittlinine I-I in Fig. 5b) durch die beiden Lamellenpakete 60 und 70, die hier mit jeweils vier Lamellen 61 - 64 bzw. 71 - 74 dargestellt sind. Grundsätzlich könnten auch nur zwei oder drei Lamellen, ggf. aber auch noch mehr davon vorhanden sein. Ihre Anzahl in beiden Paketen muss auch nicht übereinstimmen. Erkennbar weisen die einzelnen Lamellen 61 - 64 bzw. 71 - 74 der beiden Pakete 60 und 70 einen ihrer Dicke etwa entsprechenden gegenseitigen Abstand auf, so dass die Pakete so ineinandergreifen können, dass auf eine Lamelle eines Paketes jeweils eine Lamelle des anderen Paketes in der Schichtung folgt. Der gegenseitige Abstand der Lamellen wird definiert und gehalten durch Kragen, die an drei 61 - 63 bzw. 71 - 73) der vier (61 - 64 bzw. 71 - 74) Lamellen jedes Pakets von Fig. 2 entlang der Ränder der Ösen 75 und 76 (sowie auch 65 und 66) ausgeformt sind. Im Bereich ihrer gegenseitigen Berührungsflächen können die Lamellen mit einer Strukturierung. Riffelung oder dergleichen (78 in Fig. 1) zur Erhöhung ihres gegenseitigen Reibwiderstandes versehen sein. Die oberste Lamelle 61 des Paketes 60 ist auch noch mit einer wannenförmigen Ausformung 68 rund um den Führungsschlitz 67 versehen, die als Führung für ein Kopfteil 81 des Spannbolzens 80 dient.

Den Bereich der Öse 75 des Lamellenpakets 70 zeigt Fig. 3 im Schnitt (II-II in Fig. 2). Die erwähnten Kragen sind hier gut zu erkennen. Weiter zeigt Fig. 3 eine Nietverbindung, durch welche das Lamellenpaket 70 zusammengehalten wird. Zur Ausbildung dieser Nietverbindung ist das Material der untersten Lamelle 71 soweit hochgezogen, dass er alle übrigen Lamellen 72 - 74 durchsetzt und um die oberste Lamelle 74 noch herumgeformt werden kann. Eine entsprechende Nietverbindung ist bei der Öse 66 des Pakets 60 vorgesehen.

Wegen der in Abhängigkeit von der Anzahl der Lamellen im Pakt z.T. recht erheblichen Materialverformung, die zur Ausbildung der dargestellten Nietverbindung erforderlich ist, wird die entsprechende Lamelle, im Beispiel die Lamelle 71, aus einem Blechmaterial gefertigt, das etwas weicher und dadurch besser verformbar ist, als das Material, das für die übrigen Lamellen verwendet wird. Letzeres sollte eher härter sein, damit die erwähnte Riffelung oder Strukturierung an den Reibflächen Bestand hat. Die einzelnen Lamellenpakete umfassen aus diesem Grunde jeweils eine weiche und eine oder mehrere harte Lamellen.

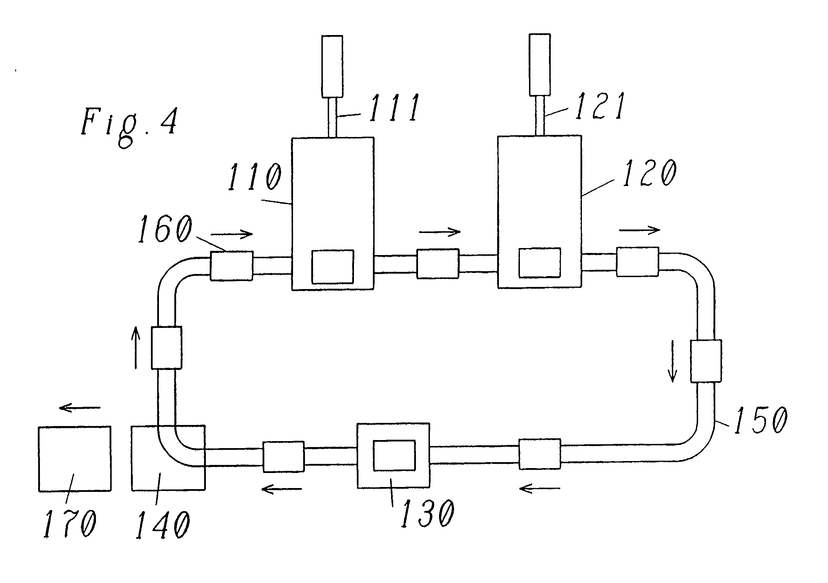

Fig. 4 zeigt nun eine Anlage zur Ausführung des Verfahrens nach der Erfindung, mit der bzw. mit dem eine rationelle, automatische Fertigung und Montage von Lamellenpaketen der vorbeschrieben Art möglich ist.

Die Anlage von Fig. 4 umfasst zwei Pressen 110 und 120, eine Handlingstation 130, eine Packstation 140 und ein all diese Elemente in einem geschlossenen Kreislauf verbindende Transportvorrichtung 150. In dem Kreislauf zikulieren in Richtung der Pfeile eine Vielzahl von Werkstückträgern, von denen nur einer mit 160 bezeichnet ist. Die erste Presse 110 wird beschickt mit einem Endlosband 111 eines weicheren Blechmaterials zur Herstellung von weichen Lamellen und die zweite Presse mit einem Endlosband eines härteren Blechmaterials 121 eines härteren Blechmaterials zur Herstellung von harten Lamellen.

Vor der ersten Presse 110 sind die Werkstückträger 160 leer. Im Takt der ersten Presse 110 wird jeweils ein leerer Werkstückträger 160 in die erste Presse 110 eingeführt und ein darin gerade beladener aus ihr entfernt und zu der zweiten Presse transportiert. In der ersten Presse 110 werden aus dem Blechmaterial 111 mittels eines sogenannten Folgeverbundwerkzeugs in mehreren sequentiellen Schritten (pro Takt ein Schritt) parallel zwei weiche Lamellen (eine Höhen- und eine Längslamelle) ausgestanzt, einschliesslich des Kragens für die erwähnte Nietverbindung vollständig umgeformt und auf dem gerade vorhandenen leeren Werkstückträger nebeneinander abgelegt, wobei die endgültige Trennung vom Band erst im letzten Schritt erfolgt.

Im Takt der ersten Presse 110 wird eine Station weiter jeweils ein mit zwei weichen Lamellen nebeneinander bestückter Werkstückträger in die zweite Presse 120 eingeführt und ein darin gerade beladener aus ihr entfernt und weiter zu der Handlingstation 130 transportiert. In der zweiten Presse 120 läuft grundsätzlich der gleiche Vorgang ab wie in der ersten Presse 110, nur dass hier aus dem härteren Blechmaterial 121 harte Lamellen hergestellt und auf dem Werkstückträger über den dort schon vorhandenen weichen Lamellen abgelegt werden. Im letzten der in der zweiten Presse 120 ausgeführten Arbeitsschritte wird auch noch die Nietverbindung hergestellt, indem der entsprechende, jeweils nach oben vorstehende Kragen an der weichen Lamelle um die harte Lamelle herumgeformt wird.

Sofern die herzustellenden Lamellenpakete jeweils mehrere harte Lamellen umfassen sollen, muss die zweite Presse 120 mit einem entsprechend höheren Takt als die erste Presse betrieben werden. Eine Schwierigkeit ergibt sich hierbei aus der Tatsache, dass die harten Lamellen desselben Pakets, wie auch im Beispiel von Fig. 3 erkennbar, untereinander unterschiedliche Formgebung vor allem hinsichtlich der Abstandskragen sowie ggf. auch ihrer Strukturierung auf den Reibflächen aufweisen. Dies ist allerdings durch Einsatz eines gesteuerten Folgeverbundwerkzeugs lösbar, das in aufeinanderfolgenden Arbeitsschritten an der gleichen Position unterschiedliche Aktionen auszuführen in der Lage ist. Entsprechend darf bei Verwendung von mehreren harten Lamellen die Umformung des Kragens an der weichen Lamelle zu Herstellung der Nietverbindung nur zusammen mit der Ablage der letzten harten Lamelle auf den Stapel erfolgen und nicht schon vorher.

In der Handlingstation 130 werden die beiden auf den Werkstückträgern-160 jeweils gemäss Fig. 5a nebeneinander liegenden Lamellenpakete auf den Werkstückträgem 160 noch in ihre Funktionsstellung ineinandergeschoben, wie sie Fig. 5 b zeigt. Damit dies ohne Probleme gelingt, wird der Abstand der Lamellen hierbei mit einer Art Kamm genau festgelegt.

In der Packstation 140 werden die derart paarweise und auch platzsparend ineinandergeschobenen Lamellenpakete schliesslich von den Werkstückträgem 160 auf vorbereitete Blister-Packungsträger 170 übertragen, wobei ein einziger Packungsträger mehrere Lamellenpakete aufnehmen kann. Die Werkstückträger 160 sind dann wieder frei, neue Lamellen in der ersten Presse 110 zu übernehmen.

## Patentansprüche

1. Verfahren zur Herstellung von Lamellenpaketen (60, 70), wie sie für verstellbare Lenksäulen in Automobilen eingesetzt werden und welche eine weiche Lamelle (71) aus einem weicheren Blechmaterial (111) und mindestens eine darübergeschichtete harte Lamelle (62-64, 72-74) aus einem härteren Blechmaterial (121) umfassen und bei welchen die Lamellen durch mindestens einen, aus der weichen Lamelle (71) jeweils herausgeformten Niet (65, 66, 75, 76) verbunden sind, **dadurch gekennzeichnet, dass** zwei nacheinander geschaltete Pressen (110, 120) verwendet werden, wobei im Takt der ersten Presse (110)
- in der ersten Presse (110) aus einem Band (111) des weicheren Materials jeweils eine weiche Lamelle (71) vollständig ausgeformt und ausgestanzt wird,
- jeweils eine so hergestellte weiche Lamelle (71) in die zweite Presse (120) transportiert wird,
- in der zweiten Presse (120) aus einem Band (121) des härteren Blechmaterials mindestens eine harte Lamelle (62-64, 72-74) vollständig ausgeformt und ausgestanzt, über einer weichen Lamelle (71) abgelegt und auch noch die Nietverbindung hergestellt wird.

2. Verfahren nach Anspruch 1, **dadurch gekennzeichnet, dass** die Lamelle (61-64, 71-74) in den Pressen (110, 120) durch Einsatz von insbesondere gesteuerten Folgeverbundwerkzeugen in jeweils mehreren Schritten hergestellt werden.

3. Verfahren nach einem der Ansprüche 1 oder 2, **dadurch gekennzeichnet, dass** die zweite Presse (120) mit einem gegenüber der ersten Presse (110) mehrfach höheren Takt gefahren wird, dass pro Takt der ersten Presse (110) in der zweiten Presse (120) entspechend mehrere harte Lamellen (62-64, 72-74) hergestellt und auf einer weichen Lamelle (71) abgelegt und erst beim jeweils letzten Hub der zweiten Presse (120) die Nietverbindung hergestellt wird.

4. Verfahren nach einem der Ansprüche 1 - 3, **dadurch gekennzeichnet, dass** die Lamellen (61-64, 71-74) in den Pressen (110, 120) auf mobilen Werkstückträgern (160) abgelegt bzw. übereinandergestapelt und auf diesen Trägern auch transportiert werden.

5. Verfahren nach Anspruch 4, **dadurch gekennzeichnet, dass** die Werkstückträger (160) in einem geschlossenen Kreislauf geführt und vor der Rückführung in die erste Presse (110) durch Abladen der Lamellenpakete (60, 70) in Transportverpackungen (170) geleert werden.

6. Verfahren nach einem der Ansprüche 1 - 5, **dadurch gekennzeichnet, dass** in den beiden Pressen (110, 120) gleichzeitig nebeneinander Höhen- und Längslamellen hergestellt und jeweils zu Höhenlamellenpaketen (60) bzw. Längslamellenpaketen (70) vernietet werden.

7. Verfahren nach Anspruch 6, **dadurch gekennzeichnet, dass** die jeweils gleichzeitig hergestellten Höhenlamellenpakete (60) und Längslamellenpakete (70) in einer der zweiten Presse (120) nachgeschalteten Station (130) durch Ineinanderschieben in gegenseitigen Eingriff miteinander gebracht werden.

8. Verfahren nach Anspruch 7, **dadurch gekennzeichnet, dass** der gegenseitige Abstand der Höhenlamellen in den Höhenlamellenpaketen (60) einerseits und der Längslamellen in den Längslamellenpakten (70) andererseits beim Ineinanderschieben der beiden Pakete jeweils mit einem Kamm definiert eingestellt wird.

## Claims

1. Method for producing lamella packets (60, 70) of the type typically used in adjustable steering columns in automobiles, which comprise a soft lamella (71) made of a relatively soft sheet metal material (111) and at least one hard lamella (62-64, 72-74) placed thereon and made of a relatively hard sheet metal material (121), and in which the lamellae are connected by at least one rivet (65, 66, 75, 76) formed, respectively, from the soft lamella (71), **characterized by** the use of two presses (110,120) positioned one after the other, wherein at the rate dictated by the first press (110)
• a soft lamella (71) is completely formed and stamped from a strip (111) of the softer material in the first press (110),
• a soft lamella (71) thus produced is transported to the second press (120),
• at least one hard lamella (62-64,72-74) is completely formed and stamped from a strip of the harder sheet metal material (121) in the second press (120), placed over a soft lamella (71), and the rivet connection is produced.

2. Method as claimed in Claim 1, **characterized in that** the lamellae (61-64,71-74) are produced in the presses (110,120) in several steps, particularly by using controlled progressive dies.

3. Method as claimed in Claim 1 or 2, **characterized in that** the second press (120) is operated at a rate that is increased by a multiple compared to the first press (110), for each cycle of the first press (110) correspondingly more hard lamellae (62-64,72-74) are produced and placed on a soft lamella (71) in the second press (120), and the rivet connection is produced on I y with the last stroke of the second press (120).

4. Method as claimed in any one of claims 1 to 3, **characterized in that** the lamellae (61-64,71-74) are placed or stacked on mobile work holders (160) in the presses (110,120) and are transported on these holders.

5. Method as claimed in Claim 4, **characterized in that** the work holders (160) are operated in a closed cycle and prior to being returned to the first press (110) are emptied by unloading the lamella packets (60,70) into packing (170) that is suitable for transport.

6. Method as claimed in any one of Claims 1 to 5, **characterized in that** the presses (110,120) simultaneously produce height lamellae and longitudinal lamellae side by side and rivet them to form height lamella packets (60) and longitudinal lamella (70) packets, respectively.

7. Method as claimed in Claim 6, **characterized in that** the simultaneously produced height lamella packets (60) and longitudinal lamella packets (70) are brought into mutual engagement by pushing them together in a station (130) downstream from the second press (120).

8. Method as claimed in Claim 7, **characterized in that** a comb is used to define the mutual spacing of the height lamellae in the height lamella packets (60) on the one hand and the longitudinal lamellae in the longitudinal lamella packets (70) on the other hand as the two packets are pushed together.

## Revendications

1. Procédé de fabrication de paquets de lamelles (60,70), tels qu'ils sont utilisés pour les colonnes de direction réglables sur les véhicules, et qui comprennent une lamelle souple (71) en matériau en tôle plus souple (111) et au moins une lamelle dure (62-64, 72-74) recouvrant celle-ci formée d'un matériau en tôle (122) plus dur, et dans lequel les lamelles sont reliées par au moins un rivet (65, 66, 75, 76) façonné respectivement à partir de la lamelle souple (71), **caractérisé en ce que** deux presses (110, 120) intercalées l'une après l'autre sont utilisées, et, au rythme de la première presse (110),
- dans la première presse (110), une lamelle souple (71) étant chaque fois entièrement façonnée et découpée à la matrice à partir d'une bande (111) du matériau plus souple,
- une lamelle souple (71) ainsi fabriquée étant chaque fois transportée,
- dans la seconde presse (120), au moins une lamelle dure (62-64 ; 72-74) étant entièrement façonnée et découpée à la l'emporte-pièce à partir d'une bande (121) du matériau plus dur, déposée sur une lamelle souple (71) et l'assemblage riveté étant à nouveau réalisé.

2. Procédé selon la revendication 1, **caractérisé en ce que** les lamelles (61-64 ; 71-74) sont fabriquées chaque fois en plusieurs étapes dans les presses (110,120) par l'utilisation en particulier d'outils à suivre composés commandés.

3. Procédé selon l'une des revendications 1 ou 2, **caractérisé en ce que** la seconde presse (120) fonctionne à une cadence plusieurs fois supérieure à celle de la première presse (110), de sorte que plusieurs lamelles dures (62-64 ; 72-74) sont fabriquées de façon correspondante dans la seconde presse (120) par cycle de la première presse (110), et sont déposées sur une lamelle souple (71), et ce n'est qu'à la dernière levée respective de la seconde presse (120) que l'assemblage riveté est réalisé.

4. Procédé selon l'une des revendications 1-3, **caractérisé en ce que** les lamelles (62-64 ; 71-74) sont déposées dans les presses (110, 120) sur des porte-outils mobiles (160) et empilées les unes sur les autres et sont également transportées sur ces porte-outils.

5. Procédé selon la revendication 4, **caractérisé en ce que** les porte-outils (160) sont dirigés dans un circuit fermé et sont vidés avant la recirculation dans la première presse (110) par déchargement des paquets de lamelles (60, 70) dans des emballages de transport (170).

6. Procédé selon l'une des revendications 1-5, **caractérisé en ce que** des lamelles de hauteur et des lamelles longitudinales sont fabriquées dans les deux presses (110, 120) simultanément et côte à côte, et sont rivetées respectivement aux paquets de lamelles de hauteur (60) ou aux paquets de lamelles longitudinales (70).

7. Procédé selon la revendication 6, **caractérisé en ce que** les paquets de lamelles de hauteur (60) et les paquets de lamelles longitudinales (70) fabriqués simultanément dans une station (130) intercalée en aval de la seconde presse (120) sont mis en prise mutuelle par glissement de l'un dans l'autre.

8. Procédé selon la revendication 7, **caractérisé en ce que** la distance mutuelle entre les lamelles de hauteur dans les paquets de lamelles de hauteur (60) d'une part, et les lamelles longitudinales dans les paquets de lamelles longitudinales (70) d'autre part est ajustée de façon définie avec un peigne lors du glissement de l'un dans l'autre des deux paquets.
